# EUROPÄISCHE PATENTSCHRIFT

(11) **EP 0 797 282 B1**
(45) Veröffentlichungstag und Bekanntmachung des Hinweises auf die Patenterteilung: **17.07.2002**
(21) Anmeldenummer: 97103659.5
(22) Anmeldetag: 05.03.1997
(51) Int. Cl.: H02H 3/33, H02H 1/06

(54) **Fehlerstromschutzschalter mit Energiespeicherschaltung**
Ground fault circuit interrupter with energy storage circuit
Disjoncteur de protection à courants de défaut avec circuit de stockage d'énergie

(30) Priorität: 18.03.1996 DE 19610558
(43) Veröffentlichungstag der Anmeldung: 24.09.1997
(73) Patentinhaber: SIEMENS AKTIENGESELLSCHAFT, 80333 München (DE)
(72) Erfinder: Bauer, Bernhard, 93053 Regensburg (DE)

(56) Entgegenhaltungen:
- EP-A- 0 392 204
- EP-A- 0 697 704
- EP-A- 0 702 445
- DE-A- 3 129 277
- DE-C- 3 917 478
- FR-A- 2 422 277

## Beschreibung

Die Erfindung bezieht sich auf einen Fehlerstromschutzschalter mit Energiespeicherschaltung gemäß dem Oberbegriff des Anspruchs 1; ein derartiger Fehlerstromschutzschalter mit Energiespeicherschaltung ist durch die EP 0 697 704 A1 bekannt.

Bei Fehlerstromschutzschaltern mit Energiespeicherschaltung wird üblicherweise ein Energiespeicherkondensator über eine Gleichrichterschaltung an der Sekundärwicklung des Summenstromwandlers aufgeladen. Wenn ein bestimmter Schwellwert erreicht ist, wird ein elektronischer Schalter schlagartig niederohmig, und der Kondensator wird entladen im Fall eines Haltemagnetauslösers über die Haltemagnetspule.

Im Idealfall ist der elektronische Schalter bis zum Erreichen des Schwellwertes unendlich hochohmig, und er weist im durchgeschalteten Zustand keinen restlichen Spannungsfall auf. Da die Spannung am Speicherkondensator im Anschluß an das Durchschalten des Schwellwertschalters wieder unter den Schwellwert absinkt, sollte der elektronische Schalter als Schwellwertschalter eine Stromspannungskennlinie mit negativem differentiellem Widerstand aufweisen. Der Umkehrpunkt der Kennlinie, also die Kippspannung und der Kippstrom sind jedoch temperaturabhängig, und sie verhalten sich in der Praxis nicht ideal.

Da man bei einem Auslösekreis mit Energiespeicherkondensator in der Praxis Haltemagnete verwendet, die auf eine bestimmte Auslösescheinleistung voreingestellt sind, kommt dem Verhalten von Kippspannung und Kippstrom eine besondere Bedeutung zu. Um bei minimaler Kippspannung eine bestimmte Mindestenergie aufbringen zu können, ist nach der Beziehung W = 1/2 C U² die Kapazität des Energiespeicherkondensators entsprechend groß zu bemessen. Ein Abgleich des Auslösefehlerstroms durch Einstellen eines Haltemagneten wie bei konventionellen Auslösekreisen ist bei Auslösekreisen mit Energiespeicherkondensator nicht möglich. Ein Abgleich durch Variation eines Parallelkondensators an der Sekundärwicklung oder durch Variation der Sekundärwicklungszahl ist fertigungstechnisch jedoch sehr aufwendig.

Um mit möglichst wenigen Sekundärwindungen auszukommen, ist man bisher bei nanokristallinem Wandlermaterial den Weg gegangen, eine niedrige Kippspannung anzustreben und Z-Dioden mit niedriger Zenerspannung in der Größenordnung von 6,2 oder 7,5 V einzusetzen. Bei den entsprechend kleinen Kippströmen liegt der Arbeitspunkt auf der Kennlinie der Z-Diode dann in einem runden Bereich der Stromspannungskennlinie. Entsprechend groß ist die Abhängigkeit der Kippspannung von Exemplarstreuungen. Außerdem bewirken Temperaturschwankungen große Toleranzabweichungen.

Aus der FR 2 422 277 ist ein Schutzkreis bekannt, der einen Differentialtransformator aufweist, welcher Erdschlüsse in einer überwachten Leitung detektiert. Die Ausgangsspannung des Transformators ist gleichgerichtet und wird dazu verwendet, einen Kondensator zu laden. Sobald die Spannung des Kondensators einen vorgegebenen Wert erreicht, entlädt sich dieser über eine Betätigungsspule eines Schutztrennschalters. Der gegebene Wert dieser Spannung wird durch eine Zenerdiode definiert. Die Kippspannung der Zenerdiode liegt zwischen 6,5 und 8,5 Volt.

Zudem ist durch die DE 31 29 277 A1 ein Fehlerstromschutzschalter bekannt, dessen Energiespeicherschaltung aus einem Kondensator besteht, der über eine Gleichrichterschaltung eines Summenstromwandlers fehlerstromabhängig aufgeladen wird und der sich über ein spannungsabhängiges Halbleiterbauelement bei Erreichen einer bestimmten Ladespannung des Kondensators impulsartig über eine Auslösespule entlädt.

Der Erfindung liegt die Aufgabe zugrunde, einen Fehlerstromschutzschalter der eingangs geschilderten Art zu entwickeln, bei dem eine Diode mit Z-Charakterisitik nach bestimmten Kriterien ausgewählt ist und die so betrieben ist, daß die Toleranz gering wird.

Die Lösung der geschilderten Aufgabe erfolgt durch einen Fehlerstromschutzschalter nach Anspruch 1. Danach weist eine Diode mit Z-Charakteristik eine Zenerspannung auf, die bei oder oberhalb 8,2 V liegt und möglichst nicht oberhalb von 10 V,
- und deren Toleranz ihrer Zenerspannung eingeengt ist auf einen Wert ≤ ± 2% bei einem Zenerstrom von 5 mA,
- und deren Arbeitsbereich um den Arbeitspunkt hinsichtlich des Zenerstroms zwischen 200 nA und 1000 nA eingestellt ist und deren Arbeitskennlinie steil verläuft,
- und der Arbeitsstrom unterhalb von 300 nA bei einer Arbeitsspannung von 0,9 x Zenerspannung eingestellt ist.

Hierdurch wird die Toleranz der Kippspannung minimiert. Es hat sich auch gezeigt, daß es günstig ist, daß einen Belastungsstrom parallel zum Energiespeicherkondensator niedrig zu halten, um eine bezüglich Auslösefehlerstrom und Auslösezeit nachteilige Belastung der Sekundärwicklung des Wandlers zu vermeiden. Durch die erfindungsgemäße Auswahl und Einstellung wird der Arbeitspunkt weitgehend unabhängig von Temperatureinflüssen, da er auf einer steilen Kennlinie liegt.

Als Diode mit Z-Charakteristik eignet sich insbesondere eine Zenerdiode. Die Diode mit Z-Charakteristik kann vorteilhaft in der Ansteuerschaltung eines Schaltelements mit negativem differentiellem Widerstand eingesetzt werden. Ein derartiges Schaltelement kann vorteilhaft aus mitgekoppelten Transistoren bestehen. Das Schaltelement kann auch eine Thyristor-Triode oder eine Thyristor-Tetrode sein.

Die Erfindung soll nun anhand von in der Zeichnung grob schematisch wiedergegebenen Ausführungsbeispielen näher erläutert werden:
In FIG 1 ist der Teil des Auslösekreises mit Speicherkondensator und Schwellwertschalter aus Referenzelement, Zenerdiode und Schaltelement aus mitgekoppelten Transistoren wiedergegeben, wobei im Schaltkreis auch die Spule eines Haltemagnetauslösers enthalten ist.
In FIG 2 ist ein Summenstromwandler mit sekundärseitigem Speicherkreis und Auslösekreis veranschaulicht.
In FIG 3 ist die Kennlinie des Schaltelements dargestellt.
In FIG 4 sind Kennlinien erfindungsgemäß ausgewählter und betriebener Dioden mit Z-Charakteristik wiedergegeben.
In FIG 5 sind Kennlinien von Dioden mit Z-Charakteristik nach dem Stand der Technik mit rundem Verlauf veranschaulicht.

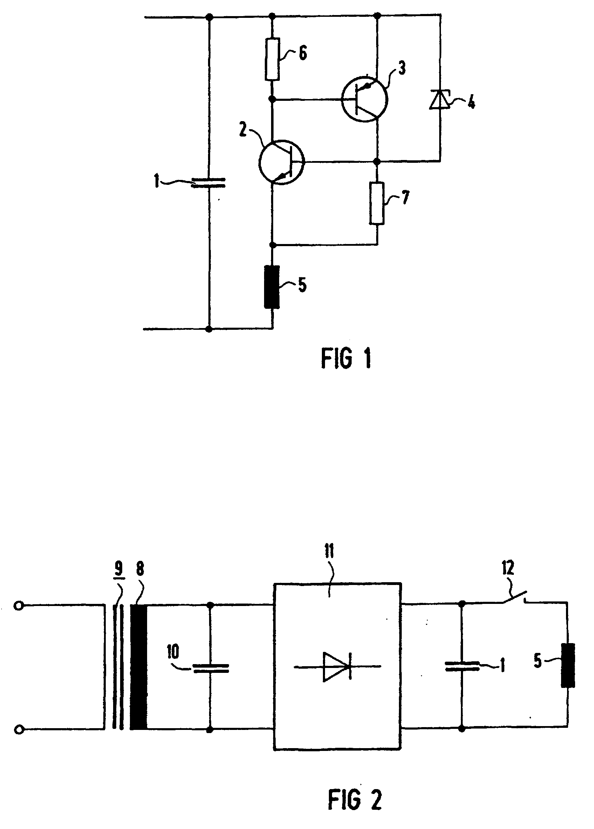

In der Schaltung nach FIG 1 ist parallel zu einem der Energiespeicherung dienenden Kondensator, hier Speicherkondensator, 1, genannt, eine Schaltung aus mitgekoppelten Transistoren 2 und 3 als Schaltelement angeordnet, wobei die Schaltung von einer Diode 4 mit Z-Charakteristik als Referenzelement des Schwellwertschalters angesteuert wird. Parallel zum Speicherkondensator 1 aber in Reihe zum Schaltelement aus den mitgekoppelten Transistoren 2 und 3 ist eine Auslösewicklung 5 einer Auslöseeinrichtung eingeschaltet. Die Auslöseeinrichtung kann beispielsweise als Haltemagnetauslöser aufgebaut sein, so daß die Auslösespule 5 als Haltemagnetspule dient. In der Schaltung sind noch Beschaltungswiderstände 6 und 7 angeordnet.

Der Summenstromwandler und der vollständige Sekundärkreis ist in FIG 2 in der Ausführung als Speicherkreis und Auslösekreis mit Schwellwertschalter schematisch dargestellt. An der Sekundärwicklung 8 eines Summenstromwandlers 9 ist ein Parallelkondensator 10 und ein Gleichrichter 11 bei üblicher Ausführung eines Fehlerstromschutzschalters mit Energiespeicherschaltung angeordnet. Außer dem Speicherkondensator 1 und der Auslösespule 5 ist ein Schwellwertschalter 12 grob schematisch wiedergegeben. Dieser faßt die Diode 4 nach FIG 1 als Referenzelement und das Schaltelement, in FIG 1 die mitgekoppelten Transistoren 2 und 3, zusammen.

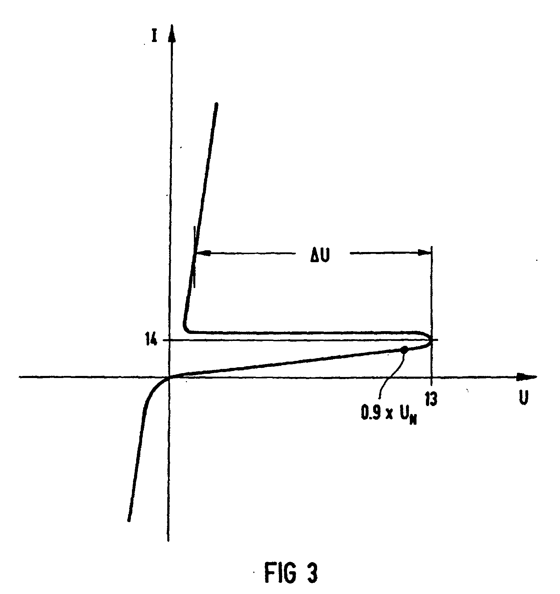

Der Schwellwertschalter 12 weist eine Kennlinie nach FIG 3 auf, bei der Kippspannung 13 und Kippstrom 14 im Stromspannungsdiagramm durch die Diode mit Z-Charakteristik bedingt sind, wobei der weitere Kennlinienverlauf längs der positiven Ordinate durch Ansteuerung des Schaltelements bedingt ist. Die üblicherweise angegebene Rücklaufdifferenzspannung ΔU ist mit 15 bezeichnet.

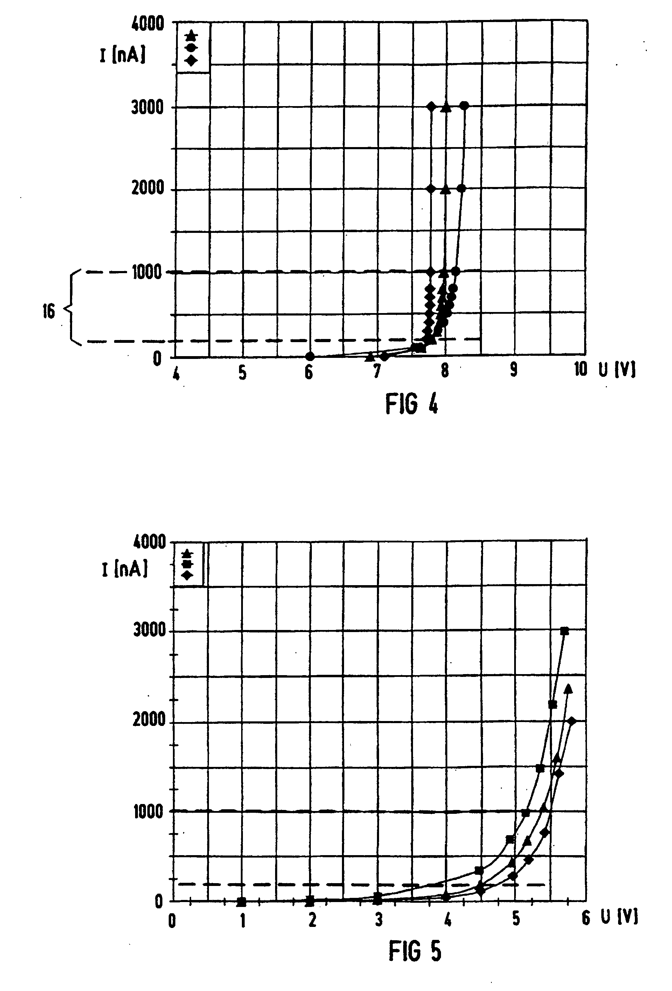

In FIG 4 ist das Stromspannungsverhalten anhand von drei Kennlinien von drei erfindungsgemäß ausgewählten und betriebenen Dioden mit Z-Charakteristik veranschaulicht und in FIG 5 für drei Dioden mit Z-Charakteristik herkömmlicher Betriebsweise. Man erkennt den runden Verlauf beim Stand der Technik und den eckigen und anschließend steilen Verlauf der Kennlinien beim erfindungsgemäßen Betrieb nach FIG 4. Der Arbeitsbereich liegt bezogen auf die Ordinate im Abschnitt 16. Das Diagramm nach FIG 4 ist für sogenannte 8,2 V-Z-Dioden repräsentativ und das Diagramm nach FIG 5 für herkömmliche 6,8 V-Z-Dioden.

Die Zenerspannung liegt nach FIG 4 vorteilhaft bei oder oberhalb 8,2 V; sie sollte andererseits möglichst nicht oberhalb von 10 V liegen, um mit möglichst wenigen Primärwindungen des Summenstromwandlers auszukommen. Die Toleranz der Zenerspannung wird auf einen Wert ≤ 2% bei einem Zenerstrom von 5 mA eingeengt. Der Arbeitsbereich um den Arbeitspunkt wird hinsichtlich des Zenerstroms zwischen 200 nA und 1000 nA eingestellt, wobei die Arbeitskennlinie steil verläuft, indem der Arbeitsstrom unterhalb von 300 nA bei einer Arbeitsspannung von 0,9 x Zenerspannung eingestellt ist, wie aus einem Vergleich mit FIG 3 zu ersehen ist.

Die Diode mit Z-Charakteristik ist vorteilhaft in der Ansteuerschaltung einer Schaltung mit negativem differentiellem Widerstand eingesetzt, wie aus der Kennlinie nach FIG 3 zu ersehen ist. In einer derartigen Schaltung ist das Schaltelement vorteilhaft durch mitgekoppelte Transistoren 2 und 3 nach FIG 1 zu realisieren. Andererseits kann in der Schaltung auch eine Thyristor-Triode oder eine Thyristor-Tetrode als Referenzelement für das Schaltelement beim Schwellwertschalter dienen.

## Patentansprüche

1. Fehlerstromschutzschalter, dessen von einem Summenstromwandler (9) gewonnene Auslösespannung einer Auslöseeinrichtung über eine Energiespeicherschaltung zugeführt wird, deren Speicher (1) geladen wird, bis ein Schwellwertschalter (12) nach Erreichen des an einem Referenzelement feststellbaren Schwellwertes den Speicher über einen Entladekreis entlädt, in dem die Auslöseeinrichtung angeordnet ist, wobei der Summenstromwandler (9) in seinem Kern aus nanokristallinem Material besteht, und dass als Referenzelement eine Diode (4) mit Z-Charakteristik dient,
**dadurch gekennzeichnet, dass**
- die Diode (4) mit Z-Charakteristik eine Zenerspannung aufweist, die bei oder oberhalb 8,2 V liegt und möglichst nicht oberhalb von 10 V,
- und deren Toleranz ihrer Zenerspannung eingeengt ist auf einen Wert ≤ ± 2% bei einem Zenerstrom von 5 mA,
- und deren Arbeitsbereich um den Arbeitspunkt hinsichtlich des Zenerstroms zwischen 200 nA und 1000 nA eingestellt ist
- und deren Arbeitskennlinie steil verläuft,
- und indem der Arbeitsstrom unterhalb von 300 nA bei einer Arbeitsspannung von 0,9 x Zenerspannung eingestellt ist.

2. Fehlerstromschutzschalter nach Anspruch 1,
**dadurch gekennzeichnet,**
**daß** als Diode (4) mit Z-Charakteristik eine Zenerdiode eingesetzt ist.

3. Fehlerstromschutzschalter nach Anspruch 1 oder 2,
**dadurch gekennzeichnet,**
**daß** die Diode (4) mit Z-Charakteristik in der Ansteuerschaltung einer Schaltung mit negativem differentiellem Widerstand eingesetzt ist.

4. Fehlerstromschutzschalter nach Anspruch 3,
**dadurch gekennzeichnet,**
**daß** in der Schaltung das Schaltelement aus mitgekoppelten Transistoren (2, 3) besteht.

5. Fehlerstromschutzschalter nach Anspruch 3,
**dadurch gekennzeichnet,**
**daß** in der Schaltung als Schaltelement eine Thyristor-Triode eingesetzt ist.

6. Fehlerstromschutzschalter nach Anspruch 3,
**dadurch gekennzeichnet,**
**daß** in der Schaltung als Schaltelement eine Thyrister-Tetrode eingesetzt ist.

## Claims

1. Residual-current-operated circuit-breaker, whose tripping voltage obtained from a summation current transformer (9) is supplied to a tripping device via an energy storage circuit, whose store (1) is charged until a trigger (12) discharges the store via a discharge circuit when the threshold value which can be determined on a reference element is reached, the tripping device being arranged in the discharge circuit, whereby the summation current transformer (9) has a core of nanocrystalline material, and with a diode (4) with a Z characteristic being used as a reference element, **characterised in that**
- the diode (4) with a Z characteristic has a Zener voltage which lies at or above 8.2 V and if possible not above 10 V,
- and whose tolerance of its Zener voltage is restricted to a value ≤ ± 2% at a Zener current of 5 mA,
- and whose operating range is set at between 200 nA and 1000 nA around the operating point as regards the Zener current,
- and which has a steep characteristic curve,
- and where the operating current is set below 300 nA at an operating voltage of 0.9 x Zener voltage.

2. Residual-current-operated circuit-breaker according to Claim 1, **characterised in that** a Zener diode is used as a diode (4) with a Z characteristic.

3. Residual-current-operated circuit-breaker according to Claims 1 or 2, **characterised in that** the diode (4) with a Z characteristic is used in the control circuit of a circuit with a negative differential resistance.

4. Residual-current-operated circuit-breaker according to Claim 3, **characterised in that** in the circuit the switching element consists of self-excitation transistors (2, 3).

5. Residual-current-operated circuit-breaker according to Claim 3, **characterised in that** a thyristor triode is used in the circuit as a switching element.

6. Residual-current-operated circuit-breaker according to Claim 3, **characterised in that** a thyristor tetrode is used in the circuit as a switching element.

## Revendications

1. Disjoncteur de protection à courant de défaut, dont la tension de déclenchement obtenue par un transformateur (9) de courant totalisateur est envoyée à un dispositif de déclenchement par l'intermédiaire d'un circuit d'accumulation d'énergie dont l'accumulateur (1) est chargé jusqu'à ce qu'un commutateur (12) à valeur de seuil, après qu'est atteinte la valeur de seuil qui peut être réglée sur un élément de référence, décharge l'accumulateur par l'intermédiaire d'un circuit de décharge dans lequel est monté le dispositif de déclenchement, le transformateur (9) de courant totalisateur étant constitué dans son noyau d'un matériau nanocristallin et une diode (4) à caractéristique en Z servant d'élément de référence,
**caractérisé en ce que**
- la diode (4) à caractéristique en Z a une tension de Zener qui est égale ou supérieure à 8,2 V et qui autant que possible n'est pas supérieure à 10 V,
- et dont la tolérance de sa tension de Zener est restreinte à une valeur inférieure ou égale à plus ou moins 2 % pour un courant de Zener de 5 mA,
- et dont la plage de travail autour du point de travail pour ce qui concerne le courant de Zener est réglée entre 200 nA et 1 000 nA,
- et dont la caractéristique de travail est abrupte,
- et le courant de travail est réglé à une valeur inférieure à 300 nA pour une tension de travail de 0,9 x la tension de Zener.

2. Disjoncteur de protection à courant de défaut suivant la revendication 1,
**caractérisé en qu'**il utilise comme diode (4) à caractéristique en Z une diode de Zener.

3. Disjoncteur de protection suivant la revendication 1 ou 2,
**caractérisé en ce que** la diode (4) à caractéristique en Z est utilisée dans le circuit de commande d'un circuit à résistance différentielle négative.

4. Disjoncteur de protection suivant la revendication 3,
**caractérisé en ce que** dans le circuit, l'élément de commutation est constitué des transistors (2, 3) couplés.

5. Disjoncteur de protection suivant la revendication 3,
**caractérisé en ce que**, dans le circuit, il est utilisé comme élément de commutation un thyristor-triode.

6. Disjoncteur de protection suivant la revendication 3,
**caractérisé en ce que**, dans le circuit, il est utilisé comme élément de commutation un thyristor-tétrode.
